# EUROPÄISCHE PATENTANMELDUNG

(11) **EP 1 680 987 A1**
(43) Veröffentlichungstag der Anmeldung: **19.07.2006**
(21) Anmeldenummer: 05000940.6
(22) Anmeldetag: 18.01.2005
(51) Int. Cl.: A47C 27/06, A47C 27/20, A47C 27/04

(54) **Polsterelement und Federelement hierfür**

(71) Anmelder: Diemer & Dr. Jaspert GbR, 85630 Grasbrunn (DE)
(72) Erfinder: Diemer, Gregor, 85456 Wartenberg (DE); Jaspert, Bodo F., 85630 Grasbrunn (DE)
(74) Vertreter: Manitz, Finsterwald & Partner GbR

(57) **Zusammenfassung**

Polsterelement wie Matratze oder Sitzpolster mit einem Körper (6,7) aus elastischem Material, insbesondere Schaumstoff, und einem Kern aus verteilt angeordneten Federelementen (1), insbesondere Kunststofffedern, wobei die Federelemente (1) zur Verringerung der Herstellungskosten und zur Verbesserung der Federeigenschaften auf mindestens einer Seite eines flächigen Trägers (2) angeordnet und durch eine Platte (6) aus elastischem Material, insbesondere Schaumstoff, abgedeckt sind, sowie Federelement hierfür.

## Beschreibung

Die vorliegende Erfindung betrifft ein Polsterelement wie Matratze oder Sitzpolster mit einem Körper aus elastischem Material, insbesondere Schaumstoff, und einem Kern aus verteilt angeordneten Federelementen, insbesondere Kunststofffedern, sowie ein Federelement hierfür.

Bei Matratzen oder Sitzpolstern der genannten Art werden die Federkerneinlagen beispielsweise als Kunststofffedern in Ausnehmungen von Schaummatratzen einzeln eingesteckt. Hierfür werden in die Schaumstoffblöcke Ausnehmungen geschnitten, um die Federn aufzunehmen. Bei Stahlfederkernen ist es bekannt, diese einzeln in Säckchen einzunähen, sogenannter Taschenfederkern. Die Federkerne werden dabei eventuell oben und unten miteinander verbunden.

Der Erfindung liegt die Aufgabe zugrunde, ein Polsterelement der eingangs genannten Art anzugeben, welches sich durch reduzierte Herstellungskosten auszeichnet und eine gute Elastizität, insbesondere auch eine gute Punktelastizität aufweist.

Diese Aufgabe wird dadurch gelöst, dass die Federelemente auf mindestens einer Seite eines flächigen Trägers angeordnet und durch eine Platte aus elastischem Material, insbesondere Schaumstoff, abgedeckt sind.

Außerdem soll ein geeignetes Federelement für ein solches Polsterelement geschaffen werden. Dies wird durch ein Federelement gemäß Anspruch 21 erreicht.

Durch die Anordnung der Federelemente auf einem Träger werden diese unverrückbar gehalten. Es ist daher nicht erforderlich, die Federelemente in Ausnehmungen oder Taschen des elastischen Schaumstoffmaterials unterzubringen. Es kann daher eine ebene Platte ohne Ausnehmungen zur Abdeckung der Federelemente verwendet werden. Damit wird einerseits Schaumstoffmaterial eingespart und andererseits können die Kosten für die Herstellung deutlich gesenkt werden, da keine Ausnehmungen geschnitten werden müssen.

Durch die Anordnung der Federelemente auf einem Träger ist es auch nicht erforderlich, die Federelemente an ihrer freien Seite miteinander zu verbinden. Die Verbindung über den Träger reicht aus, um die Federelemente in dem Polsterelement zu fixieren. Aufgrund der unverbundenen freien Enden der Federelemente können diese unabhängig voneinander komprimiert werden, so dass sich eine hohe Punktelastizität ergibt.

Durch unterschiedliche Festigkeiten des Trägers können bestimmte Zoneneigenschaften wie beispielsweise eine gegenüber dem Rest der Matratze weichere Schulterzone geschaffen werden. Dafür ist der Träger nach einer Ausgestaltung der Erfindung zumindest bereichsweise flexibel, insbesondere elastisch ausgebildet. Er kann aber auch zumindest bereichsweise starr ausgebildet sein, um härtere Zonen zu schaffen.

Der Träger kann beispielsweise aus textilem Material, insbesondere einem Gewebe, Gewirke, Geflecht oder Vlies bestehen. Darüber hinaus kann der Träger auch als Gitter ausgebildet sein.

Die Federelemente sind mit dem Träger bevorzugt fest verbunden, insbesondere verschweißt, verklebt, verschraubt, verheftet, verclipst, vernäht oder vernietet. Dadurch kann die Dauerhaltbarkeit des Polsterelementes gewährleistet werden.

Nach einer bevorzugten Ausgestaltung der Erfindung sind beidseits des Trägers Federelemente angeordnet. Auf beiden Seiten des Polsterelementes kommen dadurch die erfindungsgemäßen Vorteile zum Tragen, insbesondere die hohe Punktelastizität.

Zur Befestigung der Federelemente auf beiden Seiten des Trägers kann der Träger Ausnehmungen aufweisen, durch welche die Federelemente hindurchgreifen. Die Federelemente haben bei dieser Ausgestaltung also auf beiden Seiten des Trägers einen federnden Abschnitt. Derartige Doppelfederelemente können einfach montiert werden, wodurch die Herstellungskosten weiter gesenkt werden können.

Die Federelemente können beidseits des Trägers zumindest bereichsweise einander gegenüberliegend angeordnet sein. Dies ist für die Verwendung von Doppelfederelementen vorteilhaft. Die Federelemente beidseits des Trägers können aber auch zumindest bereichsweise versetzt zueinander angeordnet sein. Dadurch kann die Auflösung des Polsterelementes erhöht werden.

Weiterhin kann die Anzahl der Federelemente auf beiden Seiten des Trägers gleich oder voneinander verschieden sein. Bei verschiedener Anzahl an Federelementen kann ein Polsterelement geschaffen werden, dessen beide Seiten eine unterschiedliche Auflösung aufweisen.

Des weiteren können die Federelemente auf der einen Seite des Trägers zumindest zum Teil eine unterschiedliche Härte zu den Federelementen auf der anderen Seite des Trägers aufweisen. Auch dadurch können den beiden Seiten des Polsterelementes verschiedene Eigenschaften gegeben werden.

Die Federelemente des Polsterelementes können jeweils einzeln oder aber auch zeilenweise härtenverstellbar sei. Aufgrund der freien Anordnung der Federelemente auf einem Träger sind diese für eine Härtenverstellung auch nach der Fertigmontage des Polsterelementes noch zugänglich, während dies bei Taschenfederkernmatratzen und ähnlichen Polsterelementen nicht der Fall ist.

Auch die Platten, welche die Federelemente auf beiden Seiten des Trägers abdecken, können untereinander unterschiedliche Härte aufweisen. Damit können ebenso unterschiedliche Eigenschaften der beiden Seiten eines Polsterelementes erreicht werden.

Des weiteren können die Platten Bereiche unterschiedlicher Härte aufweisen. Die Einstellung von Zoneneigenschaften, beispielsweise einer weichen Schulterzone, kann hierdurch alternativ erreicht oder unterstützt werden.

Ein erfindungsgemäßes Federelement, wie es insbesondere zur Verwendung in einem erfindungsgemäßen Polsterelement eingesetzt werden kann, ist mit einer in Bezug auf die Federachse oberen Stützfläche, einer unteren Stützfläche und mindestens drei jeweils von der oberen Stützfläche zur unteren Stützfläche längs mindestens zwei voneinander verschiedenen Ebenen verlaufenden, elastischen Federstreben versehen, die zwischen oberer und unterer Stützfläche mindestens einmal derart abgewinkelt oder gebogen ausgebildet sind, dass sie jeweils mindestens zwei in Federrichtung übereinanderliegende Abschnitte aufweisen, die bei Belastung des Federelementes elastisch aufeinander zu bewegt werden, wobei zwischen oberer Stützfläche und unterer Stützfläche eine Mittelebene vorgesehen ist und wobei Federstreben sowohl zwischen der oberen Stützfläche und der Mittelebene als auch zwischen der Mittelebene und der unteren Stützfläche vorgesehen sind.

Ein derartiges Doppelfederelement kann insbesondere vorteilhaft mit einem Träger verwendet werden, welcher Ausnehmungen zum Hindurchführen von Federelementen aufweist. Zum Einführen des Federelementes in eine Ausnehmung des Trägers wird dieses in Federrichtung auseinandergezogen, wodurch sich dessen Umfang etwa auf den Umfang der oberen und unteren Stützfläche verringert. Nach dem Einführen befindet sich die Mittelebene im Bereich der Ausnehmung des Trägers und die Federstreben übergreifen nach Rückkehr in ihre Ausgangsstellung den Träger beidseits. Die Federelemente sind dadurch im Träger bereits fixiert und können auf beiden Seiten mit je einer Schaumstoffplatte abgedeckt werden, die keinerlei Ausnehmungen zur Aufnahme der Federelemente benötigt. Ebenso wenig sind Verbindungen zwischen benachbarten Federelementen an ihrem freien, vom Träger entfernten Ende erforderlich, so dass die Federelemente unabhängig voneinander komprimiert werden können.

Die mittlere Ebene ist bei dem erfindungsgemäßen Federelement insbesondere durch eine zur oberen Stützfläche und zur unteren Stützfläche parallele Platte gebildet. Die mittlere Ebene bildet dadurch eine Anschlagsebene für die obere und die untere Stützfläche.

Die Federstreben zwischen oberer Stützfläche und Mittelebene können nach einer Ausgestaltung der Erfindung mit den Federstreben zwischen der Mittelebene und der unteren Stützfläche fluchten. Sie können gegenüber diesen aber auch um die Federachse verdreht angeordnet sein.

Des weiteren können die oberen Federstreben und die unteren Federstreben dieselbe oder voneinander verschiedene Härte aufweisen. Im Falle einer verschiedenen Härte kann ein Polsterelement mit unterschiedlicher Federcharakteristik je nach Seite geschaffen werden. Auch kann eine stufenweise Federcharakteristik geschaffen werden, indem zunächst eine hohe Elastizität und anschließend eine geringe Elastizität oder umgekehrt eingestellt wird.

Nach einer weiteren Ausgestaltung der Erfindung, die auch für sich beansprucht wird, weisen die Federstreben jeweils eine die Abwinklung oder Biegung übergreifende zentrale Ausnehmung auf. Durch derartig geteilte Federarme ergibt sich eine Verdoppelung der Federarme und eine erhöhte Kippstabilität bei verhältnismäßig einfacher Herstellung.

Die Federstreben sind des weiteren bevorzugt so ausgebildet und angeordnet, dass sie sich bei Betrachtung in mindestens einer Richtung nicht überlappen, so dass sie sich auch nicht teilweise gegenseitig verdecken. Dadurch werden Hinterschnitte vermieden, so dass die Federelemente mit einer einfachen zweiteiligen Form einstückig aus Kunststoff hergestellt werden können.

Besonders bevorzugt ist es, wenn drei Federstreben zwischen oberer Stützfläche und unterer Stützfläche bzw. zwischen oberer Stützfläche und Mittelebene sowie zwischen Mittelebene und unterer Stützfläche im Falle einer Doppelfederanordnung vorgesehen sind. Dies hat sich sowohl von der Herstellung als auch von den Federeigenschaften her als vorteilhaft erwiesen, insbesondere wenn die Federstreben gleichmäßig um die Federachse verteilt angeordnet sind.

Bevorzugt ist es außerdem, wenn das Federelement einstückig ausgebildet ist, insbesondere einschließlich Befestigungsmittel wie Haken und/oder Ausnehmungen zur Befestigung in Art eines Bajonettverschlusses. Auch dadurch können Kosten gesenkt werden.

Ein nicht beschränkendes Ausführungsbeispiel ist in den Zeichnungen dargestellt und wird nachfolgend beschrieben. Es zeigen, jeweils in schematischer Darstellung,
- Fig. 1: einen Querschnitt durch eine erfindungsgemäße Matratze,
- Fig. 2: eine Draufsicht auf die Oberseite einer erfindungsgemäßen Matratze mit entfernter oberer Schaumstoffplatte,
- Fig. 3: eine perspektivische Ansicht eines erfindungsgemäßen Feder-elementes,
- Fig. 4: eine Draufsicht auf die Oberseite des Federelementes von Fig. 3, und
- Fig. 5: eine Seitenansicht des Federelementes von Fig. 3.

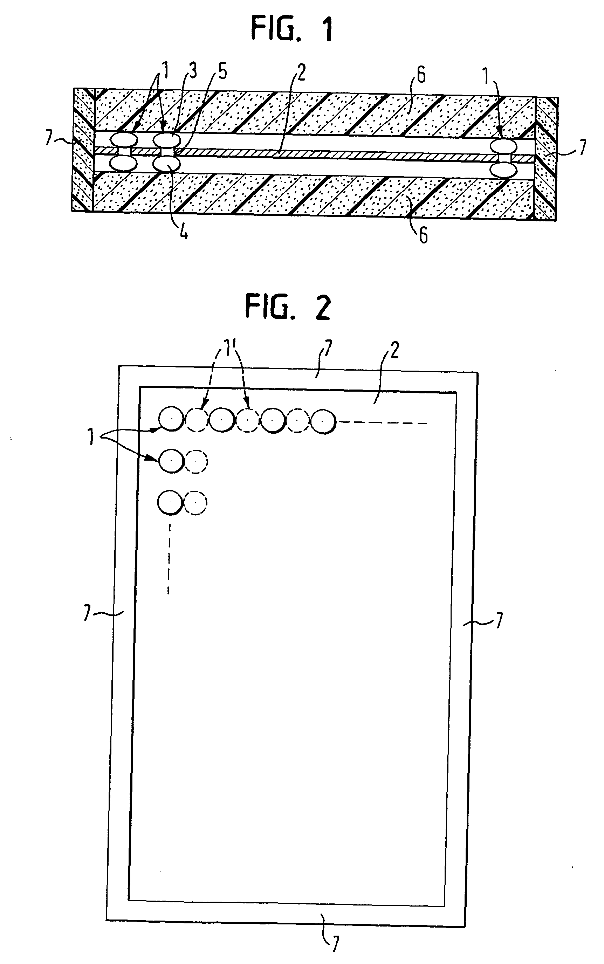

Die in den Fig. 1 und 2 dargestellte Matratze umfasst eine Vielzahl von verteilt angeordneten Federelementen 1, die beidseits eines flächigen Trägers 2 angeordnet sind. Bei den Federelementen 1 handelt es sich um Doppelfederelemente, die jeweils zwei Federabschnitte 3 und 4 aufweisen, von denen sich jeder auf einer Seite des Trägers 2 befindet. Zur Befestigung sind die Federelemente 1 durch Ausnehmungen 5 im Träger 2 hindurch gesteckt und werden durch die beiden Federabschnitte 3 und 4, die einen größeren Durchmesser aufweisen als die Ausnehmungen 5, am Träger gehalten. Alternativ oder zusätzlich ist eine Befestigung durch Verschweißen, Verkleben, Verschrauben, Verheften, Verclipsen, Vernähen, Vernieten oder in sonstiger Weise möglich. Eine Verbindung der Federelemente 1 untereinander ist dagegen nicht vorgesehen.

Die Federelemente 1 sind auf ihren vom Träger 2 wegweisenden Seiten jeweils durch eine Schaumstoffplatte 6 abgedeckt, wobei eine Verbindung zwischen den Federelementen und den Platten 6 möglich aber nicht notwendig ist. An den Seiten ist die Matratze außerdem durch weitere Schaumstoffelemente 7 verschlossen.

Der Träger 2 kann aus textilem Material, insbesondere einem Gewebe, Gewirke, Geflecht oder Vlies bestehen. Er kann aber auch aus starrem Material bestehen und beispielsweise als Gitter ausgebildet sein. Eine starre Ausgestaltung des Trägers 2 ist insbesondere dann vorteilhaft, wenn die beiden Seiten der Matratze mit unterschiedlichen Eigenschaften ausgestattet werden sollen, indem Federelemente 1 verwendet werden, deren beide Federabschnitte 3, 4 unterschiedliche Federeigenschaften aufweisen. Die Federeigenschaften der Federelemente 1 können auch bereichsweise unterschiedlich ausgebildet sein, beispielsweise können im Schulterbereich der Matratze weichere Federn 1 eingesetzt werden als in den übrigen Bereichen, um ein tiefes Einsinken der Schulter in Seitenlage zu ermöglichen.

Auch der Träger 2 kann bereichsweise flexibel ausgebildet sein, um eine höhere Elastizität zu erreichen. Des weiteren können die Schaumstoffplatten 6 Bereiche unterschiedlicher Härte aufweisen, und natürlich können die Platten 6 auf den beiden Seiten der Matratze voneinander verschiedene Härte aufweisen.

Weiterhin können die Federelemente 1 härtenverstellbar ausgebildet sein. Dabei ist eine Einzelverstellung oder auch eine zeilenweise Verstellung möglich. Die Federelemente 1 auf beiden Seiten des Trägers 2 können so angeordnet sein, dass sie miteinander fluchten, wie dies bei den in Fig. 1 dargestellten Doppelfederelementen 1 der Fall ist. Es können aber auch Federelemente 1' auf beiden Seiten des Trägers 2 vorgesehen sein, die zueinander versetzt angeordnet sind, wie dies in Fig. 2 dargestellt ist. Hierdurch kann die Gesamtauflösung der Matratzenfläche vergrößert werden.

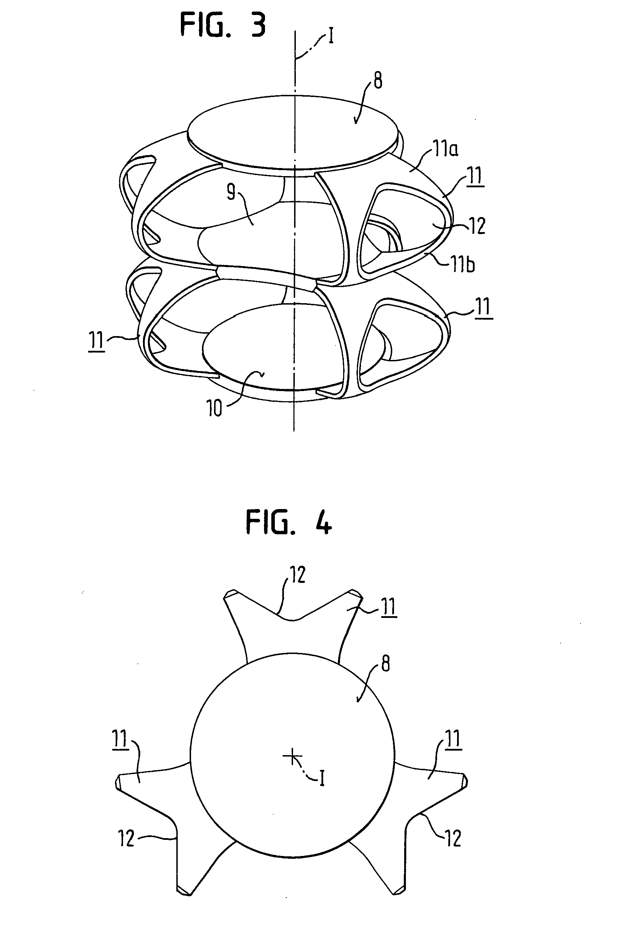

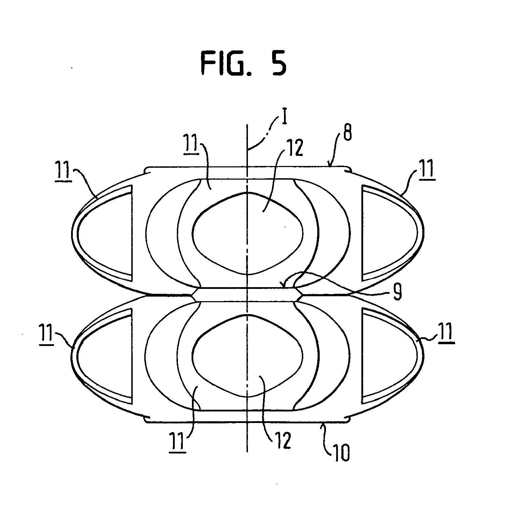

Das in den Fig. 3 bis 5 dargestellte Federelement kann insbesondere als Doppelfederelement 1 für die in Fig. 1 dargestellte Matratze eingesetzt werden. Das Federelement umfasst eine obere Stützfläche 8, eine mittlere Platte 9 und eine untere Stützfläche 10. Zwischen der oberen Stützfläche 8 und der mittleren Platte 9 sowie zwischen der mittleren Platte 9 und der unteren Stützfläche 10 sind jeweils drei Federstreben 11 angeordnet, die um die Federachse I des Federelementes gleichmäßig verteilt angeordnet sind. Die Federstreben 11 zwischen der oberen Stützfläche 8 und der mittleren Platte 9 fluchten dabei jeweils mit den Federstreben 11 zwischen der mittleren Platte 9 und der unteren Stützfläche 10. Die oberen Federstreben 11 könnten aber auch gegenüber den unteren Federstreben 11 um die Federachse I verdreht angeordnet sein.

Die Federstreben 11 sind zwischen oberer Stützfläche 8 und mittlerer Platte 9 bzw. zwischen mittlerer Platte 9 und unterer Stützfläche 10 derart nach außen gebogen ausgebildet, dass sie jeweils zwei in Federrichtung übereinanderliegende Abschnitte 11a und 11 b aufweisen, die bei Belastung des Federelementes in Richtung der Federachse I elastisch aufeinanderbewegt werden. Außerdem weisen die Federstreben 11 jeweils eine die Biegung übergreifende zentrale Ausnehmung 12 auf. Durch diese geteilte Ausgestaltung ergibt sich quasi eine Verdoppelung der Federstreben und dadurch eine bessere Kippstabilität und ein verbessertes Federverhalten.

Das Federelement ist insbesondere einstückig ausgebildet. Dabei sind die Federstreben 11 insbesondere so ausgebildet und angeordnet, dass das Federelement mit einer einfachen zweiteiligen Form entformbar ist. Das Federelement kann dadurch in günstiger Weise als Kunststoffformteil hergestellt werden.

Es ergibt sich ein kostengünstig herstellbares Polsterelement, welches insbesondere als Matratze oder Sitzpolster einsetzbar ist und gute Federeigenschaften aufweist. Es können zwei Seiten sowie verschiedene Bereiche mit unterschiedlichen Federeigenschaften geschaffen werden. Auch ist günstig eine Härtenverstellung der Federelemente realisierbar.

### Bezugszeichenliste

- 1, l': Federelement
- 2: Träger
- 3: Federabschnitt von 1
- 4: Federabschnitt von 1
- 5: Ausnehmung
- 6: Platte
- 7: Seitenteil
- 8: obere Stützfläche
- 9: Mittelplatte
- 10: untere Stützfläche
- 11: Federstrebe
- 12: Ausnehmung

- I: Federachse

## Patentansprüche

1. Polsterelement wie Matratze oder Sitzpolster mit einem Körper (6, 7) aus elastischem Material, insbesondere Schaumstoff, und einem Kern aus verteilt angeordneten Federelementen (1, 1'), insbesondere Kunststofffedern,
**dadurch gekennzeichnet,**
**dass** die Federelemente (1, 1') auf mindestens einer Seite eines flächigen Trägers (2) angeordnet und durch eine Platte (6) aus elastischem Material, insbesondere Schaumstoff, abgedeckt sind.

2. Polsterelement nach Anspruch 1,
**dadurch gekennzeichnet,**
**dass** der Träger (2) aus textilem Material, insbesondere einem Gewebe, Gewirke, Geflecht oder Vlies besteht und/oder dass der Träger (2) als Gitter ausgebildet ist und/oder dass die Federelemente (1) mit dem Träger (2) fest verbunden, insbesondere verschweißt, verklebt, verschraubt, verheftet, verclipst, vernäht oder vernietet sind.

3. Polstermaterial nach einem der vorhergehenden Ansprüche,
**dadurch gekennzeichnet,**
**dass** der Träger (2) zumindest bereichsweise flexibel, insbesondere elastisch ist und/oder dass der Träger mindestens bereichsweise starr ist und/oder dass beidseits des Trägers (2) Federelemente (1, 1') angeordnet sind und/oder dass der Träger (2) Ausnehmungen (5) aufweist, durch welche die Federelemente (1) hindurchgreifen.

4. Polstermaterial nach einem der vorhergehenden Ansprüche,
**dadurch gekennzeichnet,**
**dass** die Federelemente (1) beidseits des Trägers (2) zumindest bereichsweise einander gegenüberliegend angeordnet sind und/oder dass die Federelemente (1') beidseits des Trägers (2) zumindest bereichsweise versetzt zueinander angeordnet sind und/oder dass die Federelemente (1, 1') auf der einen Seite und auf der anderen Seite des Trägers (2) zumindest zum Teil unterschiedliche Härte aufweisen.

5. Polstermaterial nach einem der vorhergehenden Ansprüche,
**dadurch gekennzeichnet,**
**dass** die Federelemente (1, 1') zumindest teilweise einzeln härtenverstellbar sind und/oder dass die Federelemente (1, 1') zumindest teilweise zeilenweise härtenverstellbar sind und/oder dass die Federelemente (1, 1') mit den Platten (6) verbunden sind.

6. Polstermaterial nach einem der vorhergehenden Ansprüche,
**dadurch gekennzeichnet,**
**dass** die Federelemente (1, 1') nicht direkt untereinander verbunden sind und/oder dass die Platten (6) auf beiden Seiten der Federelemente (1, 1') untereinander unterschiedliche Härte aufweisen und/oder dass mindestens eine der Platten (6) Bereiche mit unterschiedlicher Härte aufweist.

7. Federelement, insbesondere zur Verwendung in einem Polsterelement nach einem der vorhergehenden Ansprüche, mit einer in Bezug auf die Federachse (I) oberen Stützfläche (8), einer unteren Stützfläche (10) und mindestens drei jeweils von der oberen Stützfläche (8) zur unteren Stützfläche (10) längs mindestens zwei voneinander verschiedenen Ebenen verlaufenden, elastischen Federstreben (11), die zwischen oberer Stützfläche (8) und unterer Stützfläche (10) mindestens einmal derart abgewinkelt oder gebogen ausgebildet sind, dass sie jeweils mindestens zwei in Federrichtung (I) übereinanderliegende Abschnitte (11a, 11b) aufweisen, die bei Belastung des Federelements elastisch aufeinander zu bewegt werden,
**dadurch gekennzeichnet,**
**dass** zwischen oberer Stützfläche (8) und unterer Stützfläche (10) eine Mittelebene (9) vorgesehen ist und dass Federstreben (11) sowohl zwischen der oberen Stützfläche (8) und der Mittelebene (9) als auch zwischen der Mittelebene (9) und der unteren Stützfläche (10) vorgesehen sind.

8. Federelement nach Anspruch 7,
**dadurch gekennzeichnet,**
**dass** die mittlere Ebene (9) durch eine zur oberen Stützfläche (8) und zur unteren Stützfläche (10) parallele Platte gebildet ist und/oder dass die Federstreben (11) zwischen oberer Stützfläche (8) und Mittelebene (9) mit den Federstreben (11) zwischen Mittelebene (9) und unterer Stützfläche (10) jeweils fluchten und/oder dass die Federstreben (11) zwischen oberer Stützfläche (8) und Mittelebene (9) gegenüber den Federstreben (11) zwischen Mittelebene (9) und unterer Stützfläche (10) um die Federachse (I) verdreht angeordnet sind.

9. Federelement, insbesondere zur Verwendung in einem Polsterelement nach einem der vorhergehenden Ansprüche, mit einer in Bezug auf die Federachse (I) oberen Stützfläche (8), einer unteren Stützfläche (10) und mindestens drei jeweils von der oberen Stützfläche (8) zur unteren Stützfläche (10) längs mindestens zwei voneinander verschiedenen Ebenen verlaufenden, elastischen Federstreben (11), die zwischen oberer Stützfläche (8) und unterer Stützfläche (10) mindestens einmal derart abgewinkelt oder gebogen ausgebildet sind, dass sie jeweils mindestens zwei in Federrichtung (I) übereinanderliegende Abschnitte (11a, 11b) aufweisen, die bei Belastung des Federelements elastisch aufeinander zu bewegt werden, insbesondere nach Anspruch 7 oder 8,
**dadurch gekennzeichnet,**
**dass** die Federstreben (11) jeweils eine die Abwinklung oder Biegung übergreifende zentrale Ausnehmung (12) aufweisen.

10. Federelement nach einem der Ansprüche 7 bis 9,
**dadurch gekennzeichnet,**
**dass** die Federstreben (11) so ausgebildet und angeordnet sind, dass sie sich bei Betrachtung in mindestens einer Richtung nicht überlappen, so dass sie sich auch nicht teilweise gegenseitig verdecken und/oder dass drei Federstreben (11) zwischen oberer Stützfläche und unterer Stützfläche bzw. zwischen oberer Stützfläche (8) und Mittelebene (9) sowie zwischen Mittelebene (9) und unterer Stützfläche (10) angeordnet sind, wobei die Federstreben (11) insbesondere um die Federachse (I) gleichmäßig verteilt angeordnet sind, und/oder dass das Federelement einstückig ausgebildet ist, insbesondere einschließlich Befestigungsmittel wie Haken und/oder Ausnehmungen zur Befestigung in Art eines Bajonettverschlusses.
